# EUROPÄISCHE PATENTSCHRIFT

(11) **EP 4 110 593 B1**
(45) Veröffentlichungstag und Bekanntmachung des Hinweises auf die Patenterteilung: **10.06.2026**
(21) Anmeldenummer: 20708465.8
(22) Anmeldetag: 28.02.2020
(51) Int. Cl.: B29C 65/34, B29D 23/00, B29C 70/82, F16L 47/03

(54) **ANSCHWEISSARMATUR**
WELD-ON FITTING
RACCORD SOUDÉ

(43) Veröffentlichungstag der Anmeldung: 04.01.2023
(73) Patentinhaber: agru Kunststofftechnik Gesellschaft m.b.H., 4540 Bad Hall (CH)
(72) Erfinder: SEVERA, Gerald, 4540 Bad Hall (AT); TAME, Josef, 4540 Pfarrkirchen (AT)
(74) Vertreter: Burger, Hannes
(86) Internationale Anmeldenummer: PCT/EP2020/055253
(87) Internationale Veröffentlichungsnummer: WO 2021/170245

(56) Entgegenhaltungen:
- EP-A2- 2 177 096
- WO-A1-97/10463
- CH-A5- 687 413

## Beschreibung

Die Erfindung betrifft eine Anschweißarmatur, sowie ein Verfahren zum Herstellen der Anschweißarmatur.

Aus der US2008001394A1 ist ein gattungsgemäßer Anschweißsattel bekannt, welcher zur Befestigung an einem Rohr dient. Der aus der US2008001394A1 bekannte Anschweißsattel weist den Nachteil auf, dass besonders bei großen Rohrdurchmessern nur eine unzureichend haltbare Verbindung zwischen dem Anschweißsattel und dem Rohr, an dem der Anschweißsattel befestigt werden soll, erreicht werden kann.

Ein Legeroboter bzw. ein Legeverfahren zum Legen eines Widerstandsheizdrahtes in einem Anschweißsattel ist aus der EP2177096A2 bekannt.

Die CH 687 413 A5 offenbart eine Heizmatte zur Schweißverbindung eines Formteils. Die WO 97/10463 A1 offenbart eine Schweißmuffe. Die EP 2 177 096 A2 offenbart ein Verfahren zum Legen eines Drahtes in einen Anschweißsattel.

Aufgabe der vorliegenden Erfindung war es, die Nachteile des Standes der Technik zu überwinden und eine verbesserte Anschweißarmatur und ein verbessertes Verfahren zur Herstellung der Anschweißarmatur zur Verfügung zu stellen.

Diese Aufgabe wird durch eine Vorrichtung und ein Verfahren gemäß den Ansprüchen gelöst.

Die Erfindung betrifft eine Anschweißarmatur umfassend:
- einen Grundkörper mit einer Rohranlagefläche;
- ein Heizwendel welches zur Herstellung einer Schweißverbindung mit einem Rohr dient, wobei das Heizwendel im Bereich der Rohranlagefläche zumindest teilweise in den Grundkörper eingebettet ist, wobei das Heizwendel einen ersten Schweißgeräteanschluss und einen zweiten Schweißgeräteanschluss aufweist.

Das Heizwendel umfasst zumindest einen ersten Widerstandsheizdraht und einen zweiten Widerstandsheizdraht, welche in einer Parallelschaltung jeweils mit dem ersten Schweißgeräteanschluss und dem zweiten Schweißgeräteanschluss elektrisch leitend verbunden sind.

Die erfindungsgemäße Anschweißarmatur weist den Vorteil auf, dass durch die parallel zueinander geschalteten Widerstandsheizdrähte bei gleichem Schweißstrom im Vergleich zu einer Anschweißarmatur mit nur einem Widerstandsheizdraht eine verbesserte und somit schnellere Wärmeentwicklung erreicht werden kann. Durch diese Maßnahme kann die Anschweißarmatur, insbesondere die Rohranlagefläche der Anschweißarmatur mit erhöhter Geschwindigkeit erhitzt werden, wodurch sich einerseits die Schweißzeit verkürzt und andererseits ein verbessertes Schweißergebnis erzielt werden kann.

Die erfindungsgemäße Anschweißarmatur ist als Anschweißsattel ausgebildet, wobei die Rohranlagefläche Sattelförmig ausgebildet ist und zur Anlage an einer Außenmantelfläche des Rohres dient, wobei die Widerstandsheizdrähte spiralförmig in der Rohranlagefläche geführt sind. Besonders das spiralförmige Verlegemuster der Widerstandsheizdrähte in der Rohranlagefläche des Anschweißsattels bringt ein überraschend gutes Ergebnis der Verschweißung mit sich.

Ferner kann vorgesehen sein, dass der erste Widerstandsheizdraht und der zweite Widerstandsheizdraht ausgehend vom ersten Schweißgeräteanschluss spiralförmig nach innen geführt sind, im innersten Punkt für den ersten Widerstandsheizdraht eine erste Wendeschleife und für den zweiten Widerstandsheizdraht eine zweite Wendeschleife ausgebildet ist und der erste Widerstandsheizdraht und der zweite Widerstandsheizdraht ausgehend vom innersten Punkt zum zweiten Schweißgeräteanschluss wieder spiralförmig nach außen geführt sind, wobei der erste Widerstandsheizdraht und der zweite Widerstandsheizdraht im Zwischenraum zwischen den nach innen geführten Abschnitten wieder nach außen geführt sind und sich dabei nicht überkreuzen. Diese Verlegeart bringt den Vorteil mit sich, dass die Widerstandsheiztdrähte die Rohranlagefläche gleichmäßig und somit effizient erwärmen können. Darüber hinaus kann vorgesehen sein, dass der erste Widerstandsheizdraht im Bereich der ersten Wendeschleife ein erstes Brückenelement und der zweite Widerstandsheizdraht im Bereich der zweiten Wendeschleife ein zweites Brückenelement aufweist. Die Brückenelemente bringen den Vorteil mit sich, dass der erste Widerstandsheizdraht bzw. der zweite Widerstandsheizdraht vereinfacht verlegt werden können, wobei der Programmieraufwand der Bahnsteuerung möglichst gering gehalten werden kann und wobei im Bereich der Wendeschleifen mittels der Brückenelemente eine einfache Schaltung des ersten Widerstandsheizdrahtes bzw. des zweiten Widerstandsheizdrahtes erreicht werden kann.

Vorteilhaft ist auch eine Ausprägung, gemäß welcher vorgesehen sein kann, dass der erste Widerstandsheizdraht und der zweite Widerstandsheizdraht zumindest abschnittsweise in einem konstanten Abstand zueinander geführt sind. Dies bringt den Vorteil mit sich, dass die zu erheizenden Rohranlagefläche in jenem Bereich, in welchem die Heizwendel angeordnet sind, gleichmäßig und homogen erhitzt werden können.

Gemäß einer Weiterbildung ist es möglich, dass der erste Widerstandsheizdraht einen ersten Drahtdurchmesser und der zweite Widerstandsheizdraht einen zweiten Drahtdurchmesser aufweisen, wobei der erste Drahtdurchmesser und der zweite Drahtdurchmesser gleich groß sind. Dies bringt den Vorteil mit sich, dass der erste Widerstandsheizdraht und der zweite Widerstandsheizdraht einen gleichen Innenwiderstand aufweisen und somit durch eine Schweißmaschine gleichmäßig erwärmt werden können. Insbesondere kann durch diese Maßnahme die Rohranlagefläche in jenem Bereich, in welchem die Heizwendel angeordnet sind, gleichmäßig und homogen erhitzt werden.

Ferner kann es zweckmäßig sein, wenn der erste Widerstandsheizdraht eine erste Drahtgesamtlänge und der zweite Widerstandsheizdraht eine zweite Drahtgesamtlänge aufweisen, wobei die erste Drahtgesamtlänge und die zweite Drahtgesamtlänge gleich groß sind. Dies bringt den Vorteil mit sich, dass der erste Widerstandsheizdraht und der zweite Widerstandsheizdraht einen gleichen Innenwiderstand aufweisen und somit durch eine Schweißmaschine gleichmäßig erwärmt werden können.

Erfindungsgemäß ist ein Verfahren zum Herstellen einer Anschweißarmatur vorgesehen, welches folgende Verfahrensschritte umfasst:
- Bereitstellen eines Grundkörpers mit einer Rohranlagefläche;
- Einbetten eines Heizwendels in den Grundkörper, wobei das Heizwendel zur Herstellung einer Schweißverbindung mit einem Rohr dient, wobei das Heizwendel einen ersten Schweißgeräteanschluss und einen zweiten Schweißgeräteanschluss aufweist. Beim Einbetten des Heizwendels in den Grundkörper werden ein erster Widerstandsheizdraht und ein zweiter Widerstandsheizdraht in den Grundkörper eingebettet, welche jeweils mit dem ersten Schweißgeräteanschluss und dem zweiten Schweißgeräteanschluss elektrisch leitend verbunden werden.

Das erfindungsgemäße Verfahren bringt den Vorteil mit sich, dass die Anschweißarmatur einfach hergestellt werden kann, wobei die Widerstandsheizdrähte des Heizwendels effizient und verfahrenssicher in den Grundkörper der Anschweißarmatur eingebettet werden können.

Weiters kann vorgesehen sein, dass die Widerstandsheizdrähte mittels eines Legeroboters eingelegt werden, wobei
- in einem ersten Legeschritt der erste Widerstandsheizdraht eingelegt wird, wobei der erste Widerstandsheizdraht ausgehend vom ersten Schweißgeräteanschluss spiralförmig nach innen gelegt wird und in einem innersten Punkt eine erste Wendeschleife ausbildet und anschließend spiralförmig zum zweiten Schweißgeräteanschluss spiralförmig nach außen gelegt wird,
- in einem zweiten Legeschritt der erste Widerstandsheizdraht im Bereich der ersten Wendeschleife unterbrochen wird und das Stück des ersten Widerstandsheizdrahtes, welches die erste Wendeschleife bildet, entfernt wird,
- in einem dritten Legeschritt der zweite Widerstandsheizdraht eingelegt wird, wobei der zweite Widerstandsheizdraht ausgehend vom ersten Schweißgeräteanschluss spiralförmig nach innen gelegt wird und in einem innersten Punkt eine zweite Wendeschleife ausbildet und anschließend spiralförmig zum zweiten Schweißgeräteanschluss nach außen gelegt wird,
- in einem vierten Legeschritt der zweite Widerstandsheizdraht im Bereich der zweiten Wendeschleife unterbrochen wird und das Stück des zweiten Widerstandsheizdrahtes, welches die zweite Wendeschleife bildet, entfernt wird,
- in einem fünften Legeschritt mittels eines ersten Brückenelementes der spiralförmig nach innen verlaufende Teil des ersten Widerstandsheizdrahtes mit dem spiralförmig nach außen verlaufenden Teil des zweiten Widerstandheizdrahtes verbunden wird, wodurch aus diesen beiden Teilen der erste Widerstandsheizdraht gebildet wird und
mittels eines zweiten Brückenelementes der spiralförmig nach innen verlaufende Teil des zweiten Widerstandsheizdrahtes mit dem spiralförmig nach außen verlaufenden Teil des ersten Widerstandheizdrahtes verbunden wird, wodurch aus diesen beiden Teilen der erste Widerstandsheizdraht gebildet wird.

Diese Verfahrensschritten bringen den Vorteil mit sich, dass der Legeroboter zum Einlegen der Widerstandsheizdrähte entlang einer einfach programmierbaren Bahnkurve geführt werden kann, wobei für den ersten Widerstandsheizdraht und den zweiten Widerstandsheizdraht dieselbe Bahnkurve verwendet werden kann, welche lediglich um den Abstand der beiden Widerstandsheizdrähte zueinander verschoben ist. Durch diese Maßnahme kann der Programmieraufwand zum Verlegen der beiden Widerstandsheizdrähte möglichst geringgehalten werden, wodurch die Verfahrensökonomie gesteigert werden kann. Da bei diesem Legeverfahren sich die beiden Widerstandsheizdrähte kreuzen, kann durch die Unterbrechung der beiden Wendeschleifen bzw. durch anschließendes Setzen eines Brückenelementes die richtige Schaltung des ersten Widerstandsheizdrahtes und des zweiten Widerstandsheizdrahtes erreicht werden.

In einer Alternativvariante kann vorgesehen sein, dass die Widerstandsheizdrähte mittels eines Legeroboters eingelegt werden, wobei der Legeroboter einen Legekopf aufweist, welcher als Doppellegekopf ausgebildet ist und zum gleichzeitigen Legen des ersten Widerstandsheizdrahtes und des zweiten Widerstandsheizdrahtes dient und wobei
der erste Widerstandsheizdraht und der zweite Widerstandsheizdraht gleichzeitig eingelegt werden, wobei die Widerstandsheizdrähte ausgehend vom ersten Schweißgeräteanschluss spiralförmig nach innen gelegt werden und in einem innersten Punkt der Doppellegekopf um 180° gedreht wird, wodurch die Widerstandsheizdrähte eine Wendeschleife ausbilden und die Widerstandsheizdrähte anschließend spiralförmig zum zweiten Schweißgeräteanschluss nach außen gelegt werden. Dies bringt den Vorteil mit sich, dass durch den Doppellegekopf eine erhöhte Legegeschwindigkeit erreicht werden kann, wobei beide Widerstandsheizdrähte gleichzeitig in den Grundkörper der Anschweißarmatur eingebettet werden können. Darüber hinaus kann bei der Verwendung eines Doppellegekopfes die Bahnsteuerung des Legeroboters auf eine Mittellinie zwischen dem ersten Widerstandsheizdraht und dem zweiten Widerstandsheizdraht programmiert werden, welche Mittellinie eine einfache Formgebung aufweist und vom Programmieraufwand ähnlich dem Programmieraufwand für die Verlegung eines einzelnen Widerstandsheizdrahtes ausfällt.

In einer weiteren Alternativvariante kann vorgesehen sein, dass der erste Widerstandsheizdraht und der zweite Widerstandsheizdraht mittels eines Legeroboters eingelegt werden, wobei der Legeroboter einen Legekopf aufweist, welcher als Einzellegekopf ausgebildet ist und ein Einlegewerkzeug aufweist, welches in einem ersten Abstand zu einer Legekopfachse angeordnet ist, wobei
- in einem ersten Legeschritt der erste Widerstandsheizdraht eingelegt wird, wobei der erste Widerstandsheizdraht ausgehend vom ersten Schweißgeräteanschluss spiralförmig nach innen gelegt wird und in einem innersten Punkt eine erste Wendeschleife ausbildet und anschließend spiralförmig zum zweiten Schweißgeräteanschluss nach außen gelegt wird, wobei die Legekopfachse entlang einer Legebahn geführt wird und der Legekopf gleichzeitig um die Legekopfachse gedreht wird,
- in einem zweiten Legeschritt das Einlegewerkzeug in einem zweiten Abstand auf die zum ersten Abstand gegenüberliegende Seite der Legekopfachse verschoben wird,
- in einem dritten Legeschritt der zweite Widerstandsheizdraht eingelegt wird, wobei der zweite Widerstandsheizdraht ausgehend vom ersten Schweißgeräteanschluss spiralförmig nach innen gelegt wird und in einem innersten Punkt eine zweite Wendeschleife ausbildet und anschließend spiralförmig zum zweiten Geräteanschluss nach außen gelegt wird, wobei die Legekopfachse entlang derselben Legebahn wie im ersten Legeschritt geführt wird und der Legekopf gleichzeitig um die Legekopfachse gedreht wird. Dieses Verfahren bringt den Vorteil mit sich, dass der erste Widerstandsheizdraht und der zweite Widerstandsheizdraht mit derselben Bahnsteuerung des Legeroboters eingelegt werden können, wobei zwischen dem Legevorgang des ersten Widerstandsheizdrahtes und dem Legevorgang des zweiten Widerstandsheizdrahtes nur das Einlegewerkzeug in einem zweiten Abstand auf die zum ersten Abstand gegenüberliegende Seite der Legekopfachse verschoben werden muss. Insbesondere kann hierbei vorgesehen sein, dass die Legekopfachse entlang einer zwischen dem ersten Widerstandsheizdraht und dem zweiten Widerstandsheizdraht liegenden Mittellinie geführt wird.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Anschweißarmatur mit einem ersten Widerstandsheizdraht und einem zweiten Widerstandsheizdraht in einer perspektivischen Ansicht;
- Fig. 2: ein erstes Ausführungsbeispiel einer Fertigungsanlage zum Herstellen der Anschweißarmatur;
- Fig. 3: ein erstes Ausführungsbeispiel einer vereinfacht dargestellten Legeanordnung des ersten Widerstandsheizdrahtes und des zweiten Widerstandsheizdrahtes;
- Fig. 4: ein schematisch dargestelltes erstes Ausführungsbeispiel eines Legekopfes, welcher als Doppellegekopf ausgebildet ist und zum gleichzeitigen Legen des ersten Widerstandsheizdrahtes und des zweiten Widerstandsheizdrahtes dient;
- Fig. 5: ein schematisch dargestelltes zweites Ausführungsbeispiel eines Legekopfes, welcher als Einzellegekopf ausgebildet ist und zum zeitversetzten Legen des ersten Widerstandsheizdrahtes und des zweiten Widerstandsheizdrahtes dient;
- Fig. 6: ein zweites Ausführungsbeispiel einer vereinfacht dargestellten Legeanordnung des ersten Widerstandsheizdrahtes und des zweiten Widerstandsheizdrahtes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

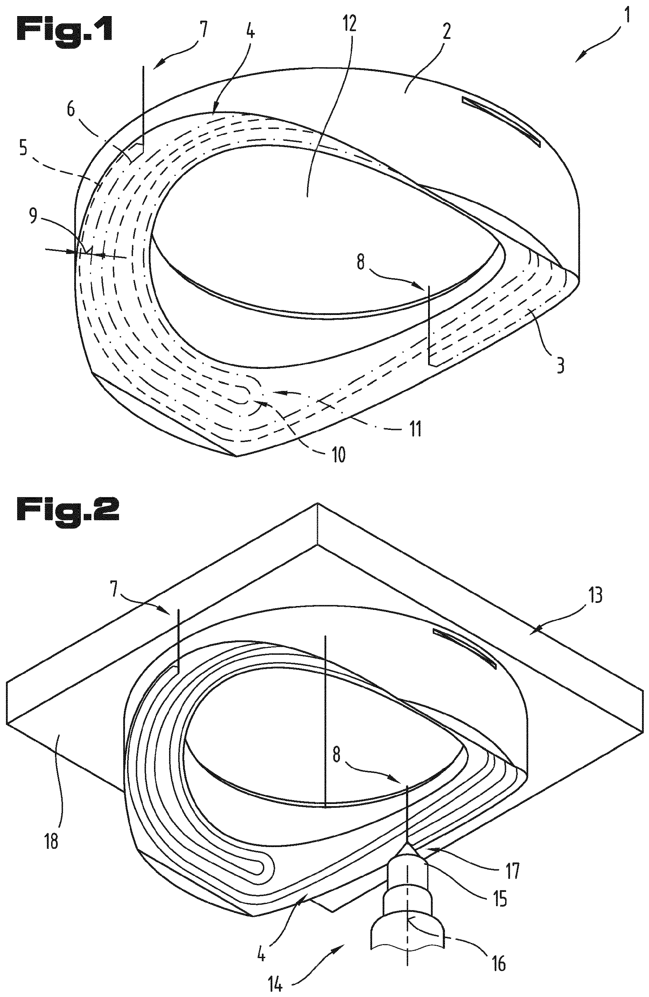

Fig. 1 zeigt ein erstes Ausführungsbeispiel einer Anschweißarmatur 1 zum Herstellen einer Schweißverbindung mit einem Rohr. Die Anschweißarmatur 1 umfasst einen Grundkörper 2, welche eine Rohranlagefläche 3 aufweist, welche zur Anlage an einem Außenmantel des Rohres dient. Im Grundkörper 2 ist im Bereich der Rohranlagefläche 3 ein Heizwendel 4 eingebettet, welches zur Erwärmung der Rohranlagefläche 3 und somit zur Herstellung der Schweißverbindung mit dem Rohr dient. Das Heizwendel 4 umfasst einen ersten Widerstandsheizdraht 5 und einen zweiten Widerstandsheizdraht 6, welche jeweils mit einem ersten Schweißgeräteanschluss 7 und einem zweiten Schweißgeräteanschluss 8 gekoppelt sind.

Der erste Widerstandsheizdraht 5 und der zweite Widerstandsheizdraht 6 sind in einer Parallelschaltung zwischen dem ersten Schweißgeräteanschluss 7 und dem zweiten Schweißgeräteanschluss 8 geschalten.

Wie aus Fig. 1 ersichtlich, kann vorgesehen sein, dass der erste Widerstandsheizdraht 5 und der zweite Widerstandsheizdraht 6 ausgehend vom gemeinsamen Schweißgeräteanschluss 7, mit welchem sowohl der erste Widerstandsheizdraht 5 als auch der zweite Widerstandsheizdraht 6 elektrisch leitend verbunden sind, in einem definierten Abstand 9 zueinander spiralförmig in der Rohranlagefläche 3 bis zu einem innersten Punkt nach innen geführt werden, wobei im innersten Punkt der erste Widerstandsheizdraht 5 eine erste Wendeschleife 10 ausbildet und der zweite Widerstandsheizdraht 6 eine zweite Wendeschleife 11 ausbildet. Die beiden Wendeschleifen 10, 11 schließen vorzugsweise einen Winkel von 180° ein, wobei im anschließenden Verlauf der erste Widerstandsheizdraht 5 und der zweite Widerstandsheizdraht 6 wieder in konstantem Abstand 9 zueinander spiralförmig nach außen geführt sind. Hierbei werden der erste Widerstandsheizdraht 5 und der zweite Widerstandsheizdraht 6 im Freiraum des spiralförmig nach innen geführten Teilabschnittes wieder nach außen geführt.

Der Einfachheit halber ist in Fig. 1 nur eine Wicklung des Heizwendels 4 dargestellt. In weiteren Ausführungsvarianten ist es jedoch auch denkbar, dass das Heizwendel 4, insbesondere der erste Widerstandsheizdraht 5 und der zweite Widerstandsheizdraht 6 in deren spiralförmiger Gestaltung in mehreren Umrundungen der Rohranlagefläche 3 nach innen bzw. wieder nach außen geführt werden.

Wie aus Fig. 1 weiters ersichtlich, kann vorgesehen sein, dass im Grundkörper 2 der Anschweißarmatur 1 ein Abzweigstutzen 12 ausgebildet ist, welcher zum Transport eines im Rohr transportieren Mediums dient.

Fig. 2 zeigt eine schematische Darstellung eines ersten Ausführungsbeispiels einer Fertigungsanlage 13 zum Herstellen der Anschweißarmatur 1.

Wie aus Fig. 2 ersichtlich, kann vorgesehen sein, dass die Fertigungsanlage 13 einen Legeroboter 14 umfasst, welcher zum Einbringen des ersten Widerstandsheizdrahtes 5 bzw. des zweiten Widerstandsheizdrahtes 6 in den Grundkörper 2 der Anschweißarmatur 1 dient. Insbesondere kann vorgesehen sein, dass der Legeroboter 14 als Gelenkarmroboter ausgebildet ist.

Insbesondere kann vorgesehen sein, dass der Endeffektor, welcher am letzten Armglied des Gelenkarmroboters angeordnet ist, in Form eines Legekopfes 15 zum Legen der Widerstandsheizdrähte 5, 6 ausgebildet ist. Weiters kann vorgesehen sein, dass der Legekopf 15 um eine Legekopfachse 16 drehbar am letzten Arm des Gelenkarmroboters angeordnet ist.

Der Legekopf 15 kann ein Einlegewerkzeug 17 aufweisen, welches zum Aufschneiden des Grundkörpers 2 im Bereich der Rohranlagefläche 3 und zum Einbetten des Widerstandsheizdrahtes 5, 6 in den Grundkörper 2 dient.

Wie aus Fig. 2 weiters ersichtlich, kann vorgesehen sein, dass die Fertigungsanlage 13 einen Spanntisch 18 umfasst, welcher zur Aufnahme des Grundkörpers 2 der Anschweißarmatur 1 dient.

Ein möglicher Aufbau der Fertigungsanlage 13 bzw. ein möglicher Betrieb der Fertigungsanlage 13 ist in der EP 2 177 096 A2 offenbart, auf welche Bezug genommen wird.

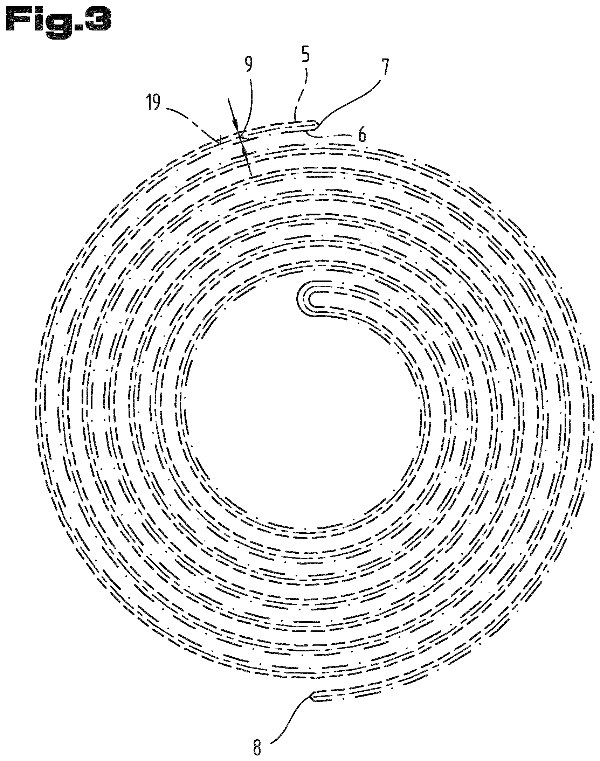

Fig. 3 zeigt ein erstes Ausführungsbeispiel einer vereinfacht dargestellten Legeanordnung des ersten Widerstandsheizdrahtes 5 und des zweiten Widerstandsheizdrahtes 6. In der Fig. 3 ist die Legeanordnung der Einfachheit halber in projizierter Ansicht dargestellt.

In Fig. 3 ist besonders gut die spiralförmige Anordnung des ersten Widerstandsheizdrahtes 5 und des zweiten Widerstandsheizdrahtes 6 ersichtlich. Weiters ist aus Fig. 3 gut ersichtlich, dass der erste Widerstandsheizdraht 5 und der zweite Widerstandsheizdraht 6 vorzugsweise im konstanten Abstand 9 zueinander geführt werden. Wie aus Fig. 3 weiters ersichtlich, kann vorgesehen sein, dass der erste Widerstandsheizdraht 5 und der zweite Widerstandsheizdraht 6 in gleichem Abstand zu einer Mittellinie 19 geführt sind.

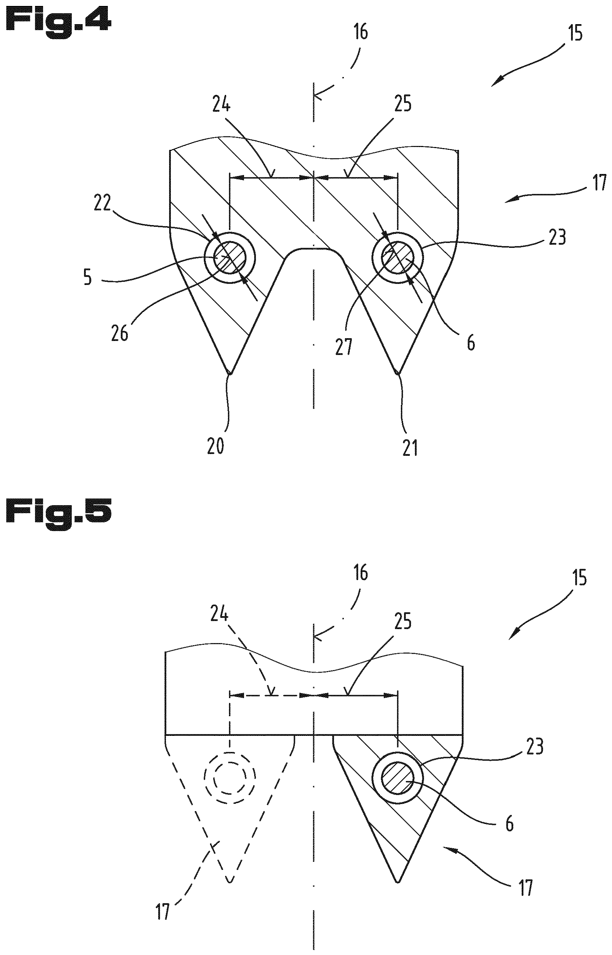

Fig. 4 zeigt ein erstes Ausführungsbeispiel des Einlegewerkzeuges 17, welches am Legekopf 15 angeordnet ist. Wie aus Fig. 4 ersichtlich, kann vorgesehen sein, dass der Legekopf 15 als Doppellegekopf ausgebildet ist, welcher zum gleichzeitigen Legen des ersten Widerstandsheizdrahtes 5 und des zweiten Widerstandsheizdrahtes 6 dient. Insbesondere kann vorgesehen sein, dass das Einlegewerkzeug 17 eine erste Schneide 20 und eine zweite Schneide 21 aufweist, welche jeweils zum Aufschneiden des Grundkörpers 2 dienen und wobei im Einlegewerkzeug 17 eine erste Drahtführung 22 und eine zweite Drahtführung 23 ausgebildet sind, welche zum Einbetten des ersten Widerstandsheizdrahtes 5 bzw. des zweiten Widerstandsheizdrahtes 6 in den Grundkörper 2 dienen.

Wie aus Fig. 4 weiters ersichtlich, kann vorgesehen sein, dass ein erster Abstand 24 des ersten Widerstandsheizdrahtes 5 zur Legekopfachse 16 gleich groß ist wie ein zweiter Abstand 25 des zweiten Widerstandsheizdrahtes 6 zur Legekopfachse 16. Durch diese Maßnahme kann erreicht werden, dass, wie aus einer Zusammenschau der Fig. 3 und 4 ersichtlich, beim Einlegen der Widerstandsheizdrähte 5, 6 die Legekopfachse 16 des Legekopfes 15 entlang der Mittellinie 19 geführt wird, wobei der erste Widerstandsheizdraht 5 und der zweite Widerstandsheizdraht 6 gleichzeitig eingelegt werden. Wie aus Fig. 4 ersichtlich, kann vorgesehen sein, dass der erste Abstand 24 und der zweite Abstand 25 jeweils halb so groß sind wie der Abstand 9 der beiden Widerstandsheizdrähte 5, 6 zueinander.

Wie aus Fig. 4 weiters ersichtlich, kann vorgesehen sein, dass der erste Widerstandsheizdraht 5 einen ersten Drahtdurchmesser 26 aufweist und der zweite Widerstandsheizdraht 6 einen zweiten Drahtdurchmesser 27 aufweist, wobei der erste Drahtdurchmesser 26 und der zweite Drahtdurchmesser 27 gleich groß sind.

Fig. 5 zeigt ein weiters Ausführungsbeispiel eines Legekopfes 15, welcher als Einzellegekopf ausgebildet ist und zum zeitversetzten Legen des ersten Widerstandsheizdrahtes 5 und des zweiten Widerstandsheizdrahtes 6 dient. Wie aus Fig. 5 ersichtlich, kann vorgesehen sein, dass das Einlegewerkzeug 17 im zweiten Abstand 25 zur Legekopfachse 16 angeordnet ist und somit zum Einlegen des zweiten Widerstandsheizdrahtes 6 dient. Auch im Ausführungsbeispiel nach Fig. 5 kann die Legekopfachse 16 entlang der Mittellinie 19 geführt werden. Nach der Beendigung des Legevorgangs zum Einlegen des zweiten Widerstandsheizdrahtes 6 kann, wie in Fig. 5 strichliert dargestellt, das Einlegewerkzeug 17 an die gegenüberliegende Seite der Legekopfachse 16 verschoben werden um den ersten Widerstandsheizdraht 5 einlegen zu können. Auch bei diesem Einlegevorgang des ersten Widerstandsheizdrahtes 5 kann der Legekopf 15, insbesondere die Legekopfachse 16 entlang der Mittellinie 19 geführt werden.

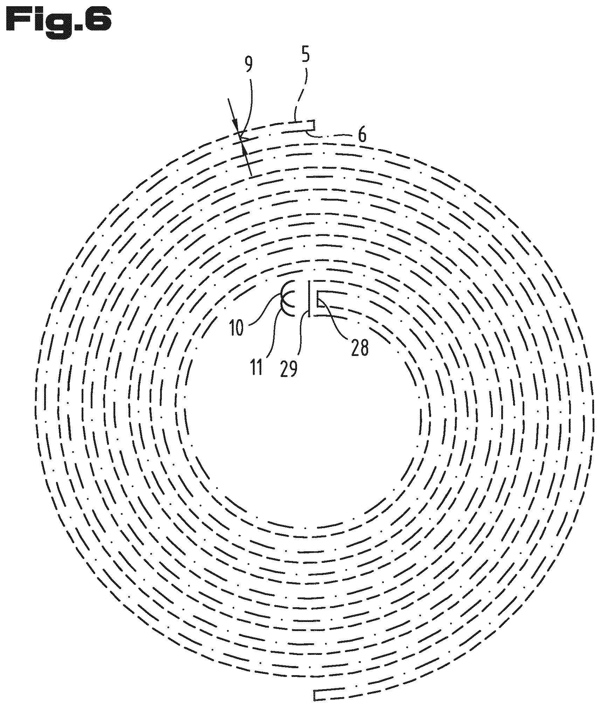

Fig. 6 zeigt ein zweites Ausführungsbeispiel einer vereinfach dargestellten Legeanordnung des ersten Widerstandsheizdrahtes 5 und des zweiten Widerstandsheizdrahtes 6.

In der Fig. 6 ist eine weitere und gegebenenfalls für sich eigenständige Ausführungsform der Legeanordnung gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Ein weiterer möglicher Verfahrensablauf zum Legen des ersten Widerstandsheizdrahtes 5 und des zweiten Widerstandsheizdrahtes 6 wird im Folgenden anhand der Fig. 6 erläutert.

In einem ersten Legeschritt kann der erste Widerstandsheizdraht 5 spiralförmig nach innen verlegt werden, im innersten Punkt eine erste Wendeschleife 10 bilden und anschließend spiralförmig zum zweiten Schweißgeräteanschluss 8 spiralförmig wieder nach außen verlegt werden. Anschließend kann jener Teilabschnitt des Widerstandsheizdrahtes 5, welcher die erste Wendeschleife 10 bildet, abgetrennt und aus dem Grundkörper 2 entfernt werden. In einem weiteren Legeschritt kann der zweite Widerstandsheizdraht 6 spiralförmig nach innen geführt werden, in einer zweiten Wendeschleife 11 die Legerichtung umgekehrt werden und anschließend der zweite Widerstandsheizdraht 6 wieder spiralförmig zum zweiten Schweißgeräteanschluss 8 nach außen verlegt werden. Anschließend kann die zweite Wendeschleife 11 des zweiten Widerstandsheizdrahtes 6 abgetrennt und aus dem Grundkörper 2 entfernt werden. In einem weiteren Verfahrensschritt kann der spiralförmig nach innen führende Teilbereich des ersten Widerstandsheizdrahtes 5 mittels eines ersten Brückenelementes 28 mit dem spiralförmig nach außen führenden Teilbereich des zweiten Widerstandsheizdrahtes 6 elektrisch leitend gekoppelt werden. Analog dazu kann der spiralförmig nach innen führende Teilbereich des zweiten Widerstandsheizdrahtes 6 mittels eines zweiten Brückenelementes 29 elektrisch leitend mit dem spiralförmig nach außen führenden Teilbereich des ersten Widerstandsheizdrahtes 5 verbunden werden.

Ein derartiger Legevorgang bringt den Vorteil mit sich, dass das Einlegewerkzeug 17 am Legekopf 15 nicht von einer Legekopfachse 16 distanziert angeordnet sein muss, sondern dass sich das Einlegewerkzeug 17 direkt auf der Legekopfachse 16 befinden kann, wobei die in der Fertigungsanlage 13 programmierte Bahn des ersten Widerstandsheizdrahtes 5 und des zweiten Widerstandsheizdrahtes 6 lediglich um den Abstand 9 der beiden Widerstandsheizdrähte 5, 6 zueinander verschoben werden muss. Somit ist keine gesonderte Programmierung der Bahnsteuerung zum Legen des ersten Widerstandsheizdrahtes 5 und der Bahnsteuerung zum Legen des zweiten Widerstandsheizdrahtes 6 erforderlich.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Anschweißarmatur
- 2: Grundkörper
- 3: Rohranlagefläche
- 4: Heizwendel
- 5: erster Widerstandsheizdraht
- 6: zweiter Widerstandsheizdraht
- 7: erster Schweißgeräteanschluss
- 8: zweiter Schweißgeräteanschluss
- 9: Abstand
- 10: erste Wendeschleife
- 11: zweite Wendeschleife
- 12: Abzweigstutzen
- 13: Fertigungsanlage
- 14: Legeroboter
- 15: Legekopf
- 16: Legekopfachse
- 17: Einlegewerkzeug
- 18: Spanntisch
- 19: Mittellinie
- 20: erste Schneide
- 21: zweite Schneide
- 22: erste Drahtführung
- 23: zweite Drahtführung
- 24: erster Abstand
- 25: zweiter Abstand
- 26: erster Drahtdurchmesser
- 27: zweiter Drahtdurchmesser
- 28: erstes Brückenelement
- 29: zweites Brückenelement

## Patentansprüche

1. Anschweißarmatur (1) umfassend:
- einen Grundkörper (2) mit einer Rohranlagefläche (3);
- ein Heizwendel (4) welches zur Herstellung einer Schweißverbindung mit einem Rohr dient, wobei das Heizwendel (4) im Bereich der Rohranlagefläche (3) zumindest teilweise in den Grundkörper (2) eingebettet ist, wobei das Heizwendel (4) einen ersten Schweißgeräteanschluss (7) und einen zweiten Schweißgeräteanschluss (8) aufweist,
wobei das Heizwendel (4) zumindest einen ersten Widerstandsheizdraht (5) und einen zweiten Widerstandsheizdraht (6) aufweist, welche in einer Parallelschaltung jeweils mit dem ersten Schweißgeräteanschluss (7) und dem zweiten Schweißgeräteanschluss (8) elektrisch leitend verbunden sind, **dadurch gekennzeichnet, dass** die Anschweißarmatur (1) als Anschweißsattel ausgebildet ist, wobei die Rohranlagefläche (3) Sattelförmig ausgebildet ist und zur Anlage an einer Außenmantelfläche des Rohres dient, wobei die Widerstandsheizdrähte (5, 6) spiralförmig in der Rohranlagefläche (3) geführt sind.

2. Anschweißarmatur (1) nach Anspruch 1, **dadurch gekennzeichnet, dass** der erste Widerstandsheizdraht (5) und der zweite Widerstandsheizdraht (6) ausgehend vom ersten Schweißgeräteanschluss (7) spiralförmig nach innen geführt sind, im innersten Punkt für den ersten Widerstandsheizdraht (5) eine erste Wendeschleife (10) und für den zweiten Widerstandsheizdraht (6) eine zweite Wendeschleife (11) ausgebildet ist und der erste Widerstandsheizdraht (5) und der zweite Widerstandsheizdraht (6) ausgehend vom innersten Punkt zum zweiten Schweißgeräteanschluss (8) wieder spiralförmig nach außen geführt sind, wobei der erste Widerstandsheizdraht (5) und der zweite Widerstandsheizdraht (6) im Zwischenraum zwischen den nach innen geführten Abschnitten wieder nach außen geführt sind und sich dabei nicht überkreuzen.

3. Anschweißarmatur (1) nach Anspruch 2, **dadurch gekennzeichnet, dass** der erste Widerstandsheizdraht (5) im Bereich der ersten Wendeschleife (10) ein erstes Brückenelement (28) und der zweite Widerstandsheizdraht (6) im Bereich der zweiten Wendeschleife (11) ein zweites Brückenelement (29) aufweist.

4. Anschweißarmatur (1) nach einem der vorhergehenden Ansprüche, **dadurch gekennzeichnet, dass** der erste Widerstandsheizdraht (5) und der zweite Widerstandsheizdraht (6) zumindest abschnittsweise in einem konstanten Abstand (9) zueinander geführt sind.

5. Anschweißarmatur (1) nach einem der vorhergehenden Ansprüche, **dadurch gekennzeichnet, dass** der erste Widerstandsheizdraht (5) einen ersten Drahtdurchmesser (26) und der zweite Widerstandsheizdraht (6) einen zweiten Drahtdurchmesser (27) aufweisen, wobei der erste Drahtdurchmesser (26) und der zweite Drahtdurchmesser (27) gleich groß sind.

6. Anschweißarmatur (1) nach einem der vorhergehenden Ansprüche, **dadurch gekennzeichnet, dass** der erste Widerstandsheizdraht (5) eine erste Drahtgesamtlänge und der zweite Widerstandsheizdraht (6) eine zweite Drahtgesamtlänge aufweisen, wobei die erste Drahtgesamtlänge und die zweite Drahtgesamtlänge gleich groß sind.

7. Verfahren zum Herstellen einer Anschweißarmatur (1), umfassend die Verfahrensschritte:
- Bereitstellen eines Grundkörpers (2) mit einer Rohranlagefläche (3);
- Einbetten eines Heizwendels (4) in den Grundkörper (2), wobei das Heizwendel (4) zur Herstellung einer Schweißverbindung mit einem Rohr dient, wobei das Heizwendel (4) einen ersten Schweißgeräteanschluss (7) und einen zweiten Schweißgeräteanschluss (8) aufweist, **dadurch gekennzeichnet, dass**
beim Einbetten des Heizwendels (4) in den Grundkörper (2) ein erster Widerstandsheizdraht (5) und ein zweiter Widerstandsheizdraht (6) in den Grundkörper (2) eingebettet werden, welche jeweils mit dem ersten Schweißgeräteanschluss (7) und dem zweiten Schweißgeräteanschluss (8) elektrisch leitend verbunden werden.

8. Verfahren nach Anspruch 7, **dadurch gekennzeichnet, dass** die Widerstandsheizdrähte (5, 6) mittels eines Legeroboters (14) eingelegt werden, wobei
- in einem ersten Legeschritt der erste Widerstandsheizdraht (5) eingelegt wird, wobei der erste Widerstandsheizdraht (5) ausgehend vom ersten Schweißgeräteanschluss (7) spiralförmig nach innen gelegt wird und in einem innersten Punkt eine erste Wendeschleife (10) ausbildet und anschließend spiralförmig zum zweiten Schweißgeräteanschluss (8) spiralförmig nach außen gelegt wird,
- in einem zweiten Legeschritt der erste Widerstandsheizdraht (5) im Bereich der ersten Wendeschleife (10) unterbrochen wird und das Stück des ersten Widerstandsheizdrahtes (5), welches die erste Wendeschleife (10) bildet, entfernt wird,
- in einem dritten Legeschritt der zweite Widerstandsheizdraht (6) eingelegt wird, wobei der zweite Widerstandsheizdraht (6) ausgehend vom ersten Schweißgeräteanschluss (7) spiralförmig nach innen gelegt wird und in einem innersten Punkt eine zweite Wendeschleife (11) ausbildet und anschließend spiralförmig zum zweiten Schweißgeräteanschluss (8) nach außen gelegt wird,
- in einem vierten Legeschritt der zweite Widerstandsheizdraht (6) im Bereich der zweiten Wendeschleife (11) unterbrochen wird und das Stück des zweiten Widerstandsheizdrahtes (6), welches die zweite Wendeschleife (11) bildet, entfernt wird,
- in einem fünften Legeschritt mittels eines ersten Brückenelementes (28) der spiralförmig nach innen verlaufende Teil des ersten Widerstandsheizdrahtes (5) mit dem spiralförmig nach außen verlaufenden Teil des zweiten Widerstandheizdrahtes verbunden wird, wodurch aus diesen beiden Teilen der erste Widerstandsheizdraht (5) gebildet wird und
mittels eines zweiten Brückenelementes (29) der spiralförmig nach innen verlaufende Teil des zweiten Widerstandsheizdrahtes (6) mit dem spiralförmig nach außen verlaufenden Teil des ersten Widerstandheizdrahtes verbunden wird, wodurch aus diesen beiden Teilen der erste Widerstandsheizdraht (5) gebildet wird.

9. Verfahren nach Anspruch 7, **dadurch gekennzeichnet, dass** die Widerstandsheizdrähte mittels eines Legeroboters (14) eingelegt werden, wobei der Legeroboter (14) einen Legekopf (15) aufweist, welcher als Doppellegekopf ausgebildet ist und zum gleichzeitigen Legen des ersten Widerstandsheizdrahtes (5) und des zweiten Widerstandsheizdrahtes (6) dient und wobei
der erste Widerstandsheizdraht (5) und der zweite Widerstandsheizdraht (6) gleichzeitig eingelegt werden, wobei die Widerstandsheizdrähte (5, 6) ausgehend vom ersten Schweißgeräteanschluss (7) spiralförmig nach innen gelegt werden und in einem innersten Punkt der Doppellegekopf (15) um 180° gedreht wird, wodurch die Widerstandsheizdrähte (5, 6) eine Wendeschleife (10, 11) ausbilden und die Widerstandsheizdrähte (5, 6) anschließend spiralförmig zum zweiten Schweißgeräteanschluss (8) nach außen gelegt werden.

10. Verfahren nach Anspruch 7, **dadurch gekennzeichnet, dass** der erste Widerstandsheizdraht (5) und der zweite Widerstandsheizdraht (6) mittels eines Legeroboters (14) eingelegt werden, wobei der Legeroboter (14) einen Legekopf (15) aufweist, welcher als Einzellegekopf ausgebildet ist und ein Einlegewerkzeug (17) aufweist, welches in einem ersten Abstand (24) zu einer Legekopfachse (16) angeordnet ist, wobei
- in einem ersten Legeschritt der erste Widerstandsheizdraht (5) eingelegt wird, wobei der erste Widerstandsheizdraht (5) ausgehend vom ersten Schweißgeräteanschluss (7) spiralförmig nach innen gelegt wird und in einem innersten Punkt eine erste Wendeschleife (10) ausbildet und anschließend spiralförmig zum zweiten Schweißgeräteanschluss (8) nach außen gelegt wird, wobei die Legekopfachse (16) entlang einer Legebahn geführt wird und der Legekopf gleichzeitig um die Legekopfachse (16) gedreht wird,
- in einem zweiten Legeschritt das Einlegewerkzeug (17) in einem zweiten Abstand (25) auf die zum ersten Abstand (24) gegenüberliegende Seite der Legekopfachse (16) verschoben wird,
- in einem dritten Legeschritt der zweite Widerstandsheizdraht (6) eingelegt wird, wobei der zweite Widerstandsheizdraht (6) ausgehend vom ersten Schweißgeräteanschluss (7) spiralförmig nach innen gelegt wird und in einem innersten Punkt eine zweite Wendeschleife (11) ausbildet und anschließend spiralförmig zum zweiten Geräteanschluss nach außen gelegt wird, wobei die Legekopfachse (16) entlang derselben Legebahn wie im ersten Legeschritt geführt wird und der Legekopf gleichzeitig um die Legekopfachse (16) gedreht wird.

## Claims

1. A weld-on fitting (1) comprising:
- a base body (2) with a pipe contact surface (3);
- a heating coil (4) which serves to produce a welded connection with a pipe, wherein the heating coil (4) is at least partially embedded in the base body (2) in the region of the pipe contact surface (3), wherein the heating coil (4) has a first welding machine connection (7) and a second welding machine connection (8),
wherein the heating coil (4) comprises at least one first resistance heating wire (5) and one second resistance heating wire (6), which are in each case electrically conductively connected in a parallel circuit to the first welding machine connection (7) and the second welding machine connection (8), **characterized in that** the weld-on fitting (1) is configured as a weld-on saddle, wherein the pipe contact surface (3) is saddle-shaped and serves for contact with an outer lateral surface of the pipe, wherein the resistance heating wires (5, 6) are routed in a spiral shape within the pipe contact surface (3).

2. The weld-on fitting (1) according to claim 1, **characterized in that** the first resistance heating wire (5) and the second resistance heating wire (6) are routed spirally inward starting from the first welding machine connection (7), a first turning loop (10) is formed at the innermost point for the first resistance heating wire (5) and a second turning loop (11) is formed for the second resistance heating wire (6), and the first resistance heating wire (5) and the second resistance heating wire (6) are routed spirally outward again from the innermost point to the second welding machine connection (8), wherein the first resistance heating wire (5) and the second resistance heating wire (6) are routed outward again in the space between the inwardly routed sections and do not cross each other in the process.

3. The weld-on fitting (1) according to claim 2, **characterized in that** the first resistance heating wire (5) comprises a first bridge element (28) in the region of the first turning loop (10) and the second resistance heating wire (6) comprises a second bridge element (29) in the region of the second turning loop (11).

4. The weld-on fitting (1) according to one of the preceding claims, **characterized in that** the first resistance heating wire (5) and the second resistance heating wire (6) are routed at least in some sections at a constant distance (9) from one another.

5. The weld-on fitting (1) according to one of the preceding claims, **characterized in that** the first resistance heating wire (5) has a first wire diameter (26) and the second resistance heating wire (6) has a second wire diameter (27), wherein the first wire diameter (26) and the second wire diameter (27) are equal.

6. The weld-on fitting (1) according to any one of the preceding claims, **characterized in that** the first resistance heating wire (5) has a first total wire length and the second resistance heating wire (6) has a second total wire length, wherein the first total wire length and the second total wire length are equal.

7. A method for manufacturing a weld-on fitting (1), comprising the following steps:
- providing a base body (2) with a pipe contact surface (3);
- embedding a heating coil (4) in the base body (2), wherein the heating coil (4) serves to produce a welded connection with a pipe, wherein the heating coil (4) has a first welding machine connection (7) and a second welding machine connection (8), **characterized in that**
when embedding the heating coil (4) into the base body (2), a first resistance heating wire (5) and a second resistance heating wire (6) are embedded into the base body (2), which are each electrically conductively connected to the first welding machine connection (7) and the second welding machine connection (8).

8. The method according to claim 7, **characterized in that** the resistance heating wires (5, 6) are inserted by means of a placement robot (14), wherein
- in a first placement step, the first resistance heating wire (5) is inserted, wherein the first resistance heating wire (5) is placed spirally inward starting from the first welding machine connection (7) and forms a first turning loop (10) at an innermost point, and is subsequently placed spirally outward toward the second welding machine connection (8),
- in a second placement step, the first resistance heating wire (5) is cut in the region of the first turning loop (10), and the section of the first resistance heating wire (5) that forms the first turning loop (10) is removed,
- in a third placement step, the second resistance heating wire (6) is inserted, wherein the second resistance heating wire (6) is placed spirally inward starting from the first welding machine connection (7) and forms a second turning loop (11) at an innermost point, and is subsequently placed spirally outward toward the second welding machine connection (8),
- in a fourth placement step, the second resistance heating wire (6) is cut in the region of the second turning loop (11), and the section of the second resistance heating wire (6) that forms the second turning loop (11) is removed,
- in a fifth placement step, the portion of the first resistance heating wire (5) running spirally inward is connected to the portion of the second resistance heating wire running spirally outward by means of a first bridge element (28), thereby forming the first resistance heating wire (5) from these two portions, and
by means of a second bridge element (29), the inwardly spiraling portion of the second resistance heating wire (6) is connected to the outwardly spiraling portion of the first resistance heating wire, thereby forming the first resistance heating wire (5) from these two portions.

9. The method according to claim 7, **characterized in that** the resistance heating wires are inserted by means of a placement robot (14), wherein the placement robot (14) comprises a placement head (15) which is configured as a double placement head and serves to simultaneously place the first resistance heating wire (5) and the second resistance heating wire (6), and wherein
the first resistance heating wire (5) and the second resistance heating wire (6) are inserted simultaneously, wherein the resistance heating wires (5, 6) are placed spirally inward starting from the first welding machine connection (7) and the double placement head (15) is rotated by 180° at its innermost point, causing the resistance heating wires (5, 6) to form a turning loop (10, 11), and the resistance heating wires (5, 6) are subsequently placed spirally outward toward the second welding machine connection (8).

10. The method according to claim 7, **characterized in that** the first resistance heating wire (5) and the second resistance heating wire (6) are inserted by means of a placement robot (14), wherein the placement robot (14) comprises a placement head (15) which is configured as a single placement head and comprises a placement tool (17) arranged at a first distance (24) from a placement head axis (16), wherein
- in a first placement step, the first resistance heating wire (5) is inserted, wherein the first resistance heating wire (5) is placed spirally inward starting from the first welding machine connection (7) and forms a first turning loop (10) at an innermost point, and is subsequently placed spirally toward the second welding machine connection (8), wherein the placement head axis (16) is routed along a placement path and the placement head is simultaneously rotated about the placement head axis (16),
- in a second placement step, the placement tool (17) is moved to the side of the placement head axis (16) opposite the first distance (24) at a second distance (25),
- in a third placement step, the second resistance heating wire (6) is inserted, wherein the second resistance heating wire (6) is placed spirally inward starting from the first welding machine connection (7) and forms a second turning loop (11) at an innermost point, and is subsequently placed spirally outward toward the second device connection, wherein the placement head axis (16) is routed along the same placement path as in the first placement step and the placement head is simultaneously rotated about the placement head axis (16).

## Revendications

1. Raccord de soudure (1), comprenant :
- un corps de base (2) avec une surface d'installation de tube (3) ;
- un serpentin chauffant (4) servant à créer une liaison par soudure avec un tube, dans lequel le serpentin chauffant (4) est au moins partiellement incorporé dans le corps de base (2) dans la région de la surface d'installation de tube (3), dans lequel le serpentin chauffant (4) présente un premier raccord pour poste à souder (7) et un second raccord pour poste à souder (8),
dans lequel le serpentin chauffant (4) présente au moins un premier fil résistif chauffant (5) et un second fil résistif chauffant (6) qui sont reliés de manière électriquement conductrice et en parallèle respectivement au premier raccord pour poste à souder (7) et au second raccord pour poste à souder (8), **caractérisé en ce que** le raccord de soudure (1) est réalisé sous la forme d'une selle de soudage, dans lequel la surface d'installation de tube (3) est réalisée en forme de selle et sert pour l'installation au niveau d'une surface d'enveloppe extérieure du tube, dans lequel les fils résistifs chauffants (5, 6) sont guidés en spirale dans la surface d'installation de tube (3).

2. Raccord de soudure (1) selon la revendication 1, **caractérisé en ce que** le premier fil résistif chauffant (5) et le second fil résistif chauffant (6) sont guidés en spirale vers l'intérieur à partir du premier raccord pour poste à souder (7), une première boucle de retournement (10) pour le premier fil résistif chauffant (5) et une seconde boucle de retournement (11) pour le second fil résistif chauffant (6) sont formées au niveau du point le plus intérieur, et le premier fil résistif chauffant (5) et le second fil résistif chauffant (6) sont à nouveau guidés en spirale vers l'extérieur à partir du point le plus intérieur pour rejoindre le second raccord pour poste à souder (8), dans lequel le premier fil résistif chauffant (5) et le second fil résistif chauffant (6) sont à nouveau guidés vers l'extérieur dans l'espace intermédiaire entre les sections guidées vers l'intérieur, et ne se croisent pas.

3. Raccord de soudure (1) selon la revendication 2, **caractérisé en ce que** le premier fil résistif chauffant (5) présente un premier élément de pontage (28) dans la région de la première boucle de retournement (10) et le second fil résistif chauffant (6) présente un second élément de pontage (29) dans la région de la seconde boucle de retournement (11).

4. Raccord de soudure (1) selon l'une quelconque des revendications précédentes, **caractérisé en ce que** le premier fil résistif chauffant (5) et le second fil résistif chauffant (6) sont guidés, au moins par sections, à une distance constante (9) l'un par rapport à l'autre.

5. Raccord de soudure (1) selon l'une quelconque des revendications précédentes, **caractérisé en ce que** le premier fil résistif chauffant (5) présente un premier diamètre de fil (26) et le second fil résistif chauffant (6) présente un second diamètre de fil (27), dans lequel le premier diamètre de fil (26) et le second diamètre de fil (27) sont de même valeur.

6. Raccord de soudure (1) selon l'une quelconque des revendications précédentes, **caractérisé en ce que** le premier fil résistif chauffant (5) présente une première longueur totale de fil et le second fil résistif chauffant (6) présente une seconde longueur totale de fil, dans lequel la première longueur totale de fil et la seconde longueur totale de fil sont de même valeur.

7. Procédé de fabrication d'un raccord de soudure (1), comprenant les étapes de procédé ci-dessous consistant à :
- fournir un corps de base (2) avec une surface d'installation de tube (3) ;
- incorporer un serpentin chauffant (4) dans le corps de base (2), dans lequel le serpentin chauffant (4) sert à réaliser une liaison par soudure avec un tube, dans lequel le serpentin chauffant (4) présente un premier raccord pour poste à souder (7) et un second raccord pour poste à souder (8), **caractérisé en ce que**
lors de l'incorporation du serpentin chauffant (4) dans le corps de base (2), un premier fil résistif chauffant (5) et un second fil résistif chauffant (6), reliés de manière électriquement conductrice et en parallèle respectivement au premier raccord pour poste à souder (7) et au second raccord pour poste à souder (8), sont incorporés dans le corps de base (2).

8. Procédé selon la revendication 7, **caractérisé en ce que** les fils résistifs chauffants (5, 6) sont insérés au moyen d'un robot de pose (14), dans lequel
- dans une première étape de pose, le premier fil résistif chauffant (5) est inséré, dans lequel le premier fil résistif chauffant (5) est posé en spirale vers l'intérieur à partir du premier raccord pour poste à souder (7) et forme une première boucle de retournement (10) au niveau d'un point le plus intérieur, puis est posé en spirale vers l'extérieur pour rejoindre le second raccord pour poste à souder (8),
- dans une deuxième étape de pose, le premier fil résistif chauffant (5) est interrompu dans la région de la première boucle de retournement (10) et la portion du premier fil résistif chauffant (5) qui forme la première boucle de retournement (10) est retirée,
- dans une troisième étape de pose, le second fil résistif chauffant (6) est inséré, dans lequel le second fil résistif chauffant (6) est posé en spirale vers l'intérieur à partir du premier raccord pour poste à souder (7) et forme une seconde boucle de retournement (11) au niveau d'un point le plus intérieur, puis est posé en spirale vers l'extérieur pour rejoindre le second raccord pour poste à souder (8),
- dans une quatrième étape de pose, le second fil résistif chauffant (6) est interrompu dans la région de la seconde boucle de retournement (11) et la portion du second fil résistif chauffant (6) qui forme la seconde boucle de retournement (11) est retirée,
- dans une cinquième étape de pose, la partie, s'étendant en spirale vers l'intérieur, du premier fil résistif chauffant (5) est reliée à la partie, s'étendant en spirale vers l'extérieur, du second fil résistif chauffant au moyen d'un premier élément de pontage (28), ce qui permet de former le premier fil résistif chauffant (5) à partir des dites deux parties, et la partie, s'étendant en spirale vers l'intérieur, du second fil résistif chauffant (6) est reliée à la partie, s'étendant en spirale vers l'extérieur, du premier fil résistif chauffant au moyen d'un second élément de pontage (29), ce qui permet de former le premier fil résistif chauffant (5) à partir des dites deux parties.

9. Procédé selon la revendication 7, **caractérisé en ce que** les fils résistifs chauffants sont insérés au moyen d'un robot de pose (14), dans lequel le robot de pose (14) présente une tête de pose (15) qui est réalisée sous la forme d'une tête de pose double et qui sert à poser de manière simultanée le premier fil résistif chauffant (5) et le second fil résistif chauffant (6), et dans lequel
le premier fil résistif chauffant (5) et le second fil résistif chauffant (6) sont insérés simultanément, dans lequel les fils résistifs chauffants (5, 6) sont posés en spirale vers l'intérieur à partir du premier raccord pour poste à souder (7), et la tête de pose double (15) est tournée de 180° au niveau d'un point le plus intérieur, ce qui fait que les fils résistifs chauffants (5, 6) forment une boucle de retournement (10, 11) et que les fils résistifs chauffants (5, 6) sont ensuite posés en spirale vers l'extérieur pour rejoindre le second raccord pour poste à souder (8).

10. Procédé selon la revendication 7, **caractérisé en ce que** le premier fil résistif chauffant (5) et le second fil résistif chauffant (6) sont insérés au moyen d'un robot de pose (14), dans lequel le robot de pose (14) présente une tête de pose (15) qui est réalisée sous la forme d'une tête de pose simple et qui présente un outil d'insertion (17) agencé à une première distance (24) d'un axe de tête de pose (16), dans lequel
- dans une première étape de pose, le premier fil résistif chauffant (5) est inséré, dans lequel le premier fil résistif chauffant (5) est posé en spirale vers l'intérieur à partir du premier raccord pour poste à souder (7) et forme une première boucle de retournement (10) au niveau d'un point le plus intérieur, puis est posé en spirale vers l'extérieur pour rejoindre le second raccord pour poste à souder (8), dans lequel l'axe de tête de pose (16) est guidé le long d'un chemin de pose et la tête de pose est simultanément tournée autour de l'axe de tête de pose (16),
- dans une deuxième étape de pose, l'outil d'insertion (17) est déplacé à une seconde distance (25), du côté de l'axe de tête de pose (16) qui est opposé à la première distance (24),
- dans une troisième étape de pose, le second fil résistif chauffant (6) est inséré, dans lequel le second fil résistif chauffant (6) est posé en spirale vers l'intérieur à partir du premier raccord pour poste à souder (7) et forme une seconde boucle de retournement (11) au niveau d'un point le plus intérieur, puis est posé en spirale vers l'extérieur pour rejoindre le second raccord pour poste à souder, dans lequel l'axe de tête de pose (16) est guidé le long du même chemin de pose que dans la première étape de pose et la tête de pose est tournée simultanément autour de l'axe de tête de pose (16).
